# EUROPÄISCHE PATENTANMELDUNG

(11) **EP 0 774 854 A2**
(43) Veröffentlichungstag der Anmeldung: **21.05.1997**
(21) Anmeldenummer: 96116975.2
(22) Anmeldetag: 23.10.1996
(51) Int. Cl.: H04M 3/50

(54) **Informationsserver für eine Vermittlungsanlage**

(30) Priorität: 16.11.1995 DE 19542740
(71) Anmelder: ROBERT BOSCH GMBH, 70442 Stuttgart (DE)
(72) Erfinder: Heitzmann, Rolf, Dipl.-Ing., 81673 München (DE); Bauer, Johann, Dipl.-Ing., 81927 München (DE)

(57) **Zusammenfassung**

Für einen Informationsserver, insbesondere Sprachserver, für eine Vermittlungsanlage ist eine Datensteuereinrichtung (DSP) vorgesehen, die einen Informationsspeicher (IFS) für zu übertragende Standortinformationen und ein Zwischenspeicher (ZWS) zur Aufnahme der zu empfangenden und zu entsendenden Daten der Informationskanäle vorgesehen. Über einen Steuerprozessor (STP) ist ein Datentausch zwischen dem Zwischenspeicher (ZWS) und einem Festspeichermedium (FSM) mittels eines PC-kompatiblen-Filesystems möglich.

Der Informationsserver kann als Anrufbeantworter oder als Auskunftssystem mit einer Vermittlungsanlage integriert werden.

## Beschreibung

Die Erfindung betrifft einen Informationsserver insbesondere einen Sprachserver für eine Vermittlungsanlage.

### Stand der Technik

Aus der DE 4107 897 A1 ist ein vermittlungstechnischer Server für ein digitales Kommunikationssystem bekannt. Dieser Server dient zur Umsetzung der von Sonderendgeräten ankommenden Datenformate an die Datenformate des Kommunikationssystems.

Aus der Druckschrift ISDN-Telekommunikationssystem Integral 33 X der Telenorma, 1993, insbesondere Seiten 39 und 40, ist als Zusatzeinrichtung für die Sprachkommunikation eines Endgerätes ein Sprachspeicher bekannt, der es erlaubt, Anrufe für berechtigte Teilnehmer entgegenzunehmen. Die Anrufe werden in sogenannte Sprach-Postfächer weitergeleitet und nach Aufforderung gespeichert. Die Bedienungsschritte werden durch Sprachansagen vorgegeben.

### Vorteile der Erfindung

Der Informationsserver mit den Merkmalen des Anspruchs 1 verbessert die Erreichbarkeit eines Telefonpartners, indem über den Informationsserver systemintegrierte Informationsdienste, insbesondere Sprachdienste, zur Verfügung gestellt werden. Der Informationsserver nach der Erfindung eignet sich zum Ersatz mehrerer an einer Telefonanlage betriebener Anrufbeantworter. Durch den Datenaustausch mittels eines PC-kompatiblen-Filesystems können Leistungsmerkmale, wie Kurzansagen, flexibel mit dem PC bearbeitet werden. Am PC geladene wechselbare Datenträger können einfach in den Informationsserver gewechselt werden. Durch die Abspeicherung der Daten in einem Festspeichermedium, insbesondere in komprimierter Form, können aufwandsarm mehrere Informationskanäle (Sprachkanäle) gleichzeitig bearbeitet werden. Leistungsmerkmale, die bisher nur in großen Telefonanlagen zur Verfügung stehen, können aufwandsarm in kleinen Anlagen bereitgestellt werden.

Der Informationsserver nach der Erfindung kann einfach in eine bestehende Vermittlungsanlage integriert werden, z. B. anstelle einer Anschlußorgan-Baugruppe (Line Card) in den Baugruppenrahmen der Vermittlungsanlage gesteckt werden.

### Zeichnungen

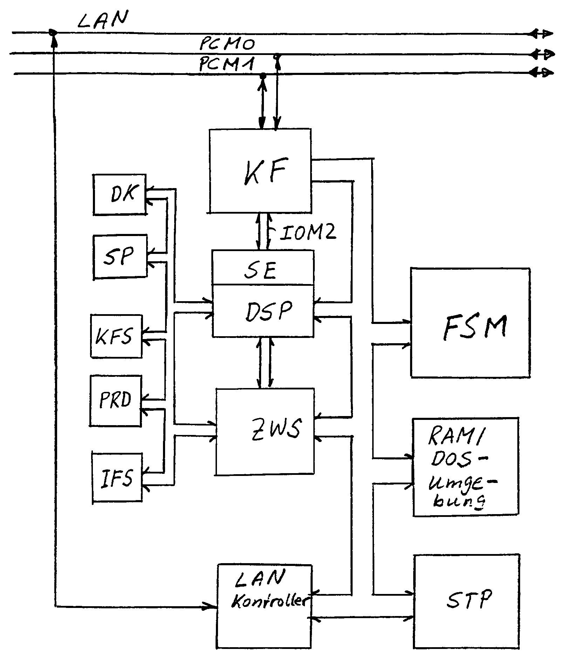

Die Figur zeigt ein Blockschaltbild der Baugruppen des Informationsservers nach der Erfindung.

### Beschreibung der Erfindung

Der Informationsserver nach der Erfindung ist in dem in der Figur gezeigten Ausführungsbeispiel auf einer Baugruppen-Karte untergebracht, die über zwei digitale Systemschnittstellen mit der Vermittlungsanlage verbunden ist. Beispielsweise kann diese Baugruppen-Karte anstelle einer Anschlußorgan-Baugruppe (Line Card) in den Baugruppenrahmen (Backplane) der Vermittlungsanlage gesteckt werden. Die digitalen Systemschnittstellen bestehen aus einem LAN-Interface zur Kommunikation mit der Vermittlungssteuerung und einem PCM-Highway-Interface zur Ankopplung an die digitalen Informationskanäle, z. B. der Sprachkanäle.

Die beiden Systemschnittstellen erlauben die Plazierung der Baugruppen-Karte in einem externen Gehäuse mit eigener Stromversorgung. Die Verbindung zur Vermittlungsanlage wird hierbei mit einem z. B. achtpoligen Kabel hergestellt. Anstelle eines PCM-Highway-Zuganges kann die Ankopplung der digitalen Informationskanäle alternativ auch durch eine anlageninterne IOM2-Schnittstelle erfolgen. Die Informationsserver-Baugruppen-Karte besitzt folgende Komponenten:
- ein Koppelfeld KF zur Ankopplung an zwei Informationskanäle (PCM-Highways) PCMO und PCM1,
- eine Sende- und Empfangseinrichtung SE sowie Datensteuereinrichtung DSP,
- ein Informationsspeicher IFS für die Sprachdaten,
- ein Programm/Datenspeicher PRD,
- ein Zwischenspeicher ZWS,
- ein Steuerprozessor STP,
- Festspeichermedium FSM mit wechselbarem Datenträger,
- ein LAN-Kontroller und
- ein PC-kompatibles-File-System, beispielsweise mit DOS-Umgebung.

Die Datensteuereinrichtung DSP empfängt/sendet die seriellen Daten der Informationskanäle (Sprachkanäle) über das Koppelfeld KF mittels der zugehörigen Sende- und Empfangseinrichtung SE. Wenn die Daten in komprimierter Form weiterverarbeitet werden, durchlaufen sie eine der Datensteuereinrichtung DSP zugeordnete Datendekompressions- bzw. -Kompressionseinrichtung DK. Die empfangenen Daten werden in den Zwischenspeicher ZWS, beispielsweise in Form eines Shared-Memory, transferiert bzw. im Sendebetrieb von dort über die Datensteuereinrichtung DSP und ggf. das Koppelfeld KF auf die Informationskanäle übertragen. Zur Kompression/Dekompression der Daten wird z. B. eine herkömmliche Kompandierungskennlinie - A-law/µ-law - benutzt. Im Informationsspeicher IFS, der der Datensteuereinrichtung DSP ebenso wie der Programm- und Datenspeicher PRD zugeordnet ist, sind Standardinformationen, beispielsweise Texte für Kurzansagen, Music on Hold und/oder Referenzdaten für eine Spracherkennung, abgespeichert. Der Steuerprozessor STP überträgt die Sprachdaten von und zum Festspeichermedium FSM, z. B. in Form einer Memory-Card (Flash) oder Festplatte, PCMCIA-Festplattenlaufwerk oder PCMCIA-Flash-Disk, mittels des PC-kompatiblen-File-Systems mit beispielsweise DOS-Umgebung und transferiert sie in/aus dem Shared-Memory für die Datensteuereinrichtung DSP. Das PC-kompatible-File-System ermöglicht die Bearbeitung der Daten im Personalcomputer. In einem Studio aufgenommene Ansagetexte können beispielsweise am PC für die Wiedergabe in der Vermittlungsanlage aufbereitet werden. Außerdem können Programme für die Datensteuereinrichtung DSP, den Steuerprozessor STP oder auch Daten für die Vermittlungssteuerung am PC beispielsweise in ein PCMCIA-Laufwerk geladen werden und dieses Laufwerk anschließend in die Informationsserver-Baugruppe gesteckt werden. Ebenso lassen sich Daten aus der Vermittlungsanlage, z. B. für Sicherungszwecke, vom Vermittlungsrechner der Vermittlungsanlage über einen separaten Steuerkanal - LAN-Verbindung - und Steuerprozessor STP in das PCMCIA-Laufwerk übertragen. Die Steuerinformation erhält der Steuerprozessor STP von der Vermittlungssteuerung über das LAN-Interface. Er steuert auch das Koppelfeld KF, welches als integrierter Schaltkreis aufgebaut sein kann.

In einer Konfiguration mit mehreren Informationsserver-Baugruppen in einer Vermittlungsanlage sind diese über den separaten Steuerkanal LAN miteinander verbunden und können über diesen Daten austauschen und ein gemeinsames Speichermedium FSM nutzen, das in eine der Informationsserver-Baugruppen gesteckt ist. Es reicht also aus, nur einen Informationsserver oder wenige mit einem Festspeichermedium auszurüsten. Die übrigen Baugruppen können über den Steuerkanal darauf zugreifen.

Als Steuerprozessor STP kann ein Microkontroller oder ein Single-Chip-PC benutzt werden.

Der Informationsserver nach der Erfindung kann gleichzeitig als Anrufbeantworter, Voice-Mailbox oder einfaches sprachgeführtes Auskunftssystem benützt werden.

Für die Anwendung als Auskunftssystem ist der Datensteuereinrichtung DSP zur Sprachführung ein Spracherkenner SP zugeordnet, der insbesondere an berechtigte Teilnehmer die im Informationsspeicher IFS abgelegten Daten an diese weiterleitet, bzw. die Abspeicherung von Daten dieser Teilnehmer im Zwischenspeicher ZWS freigibt. Die Referenzdaten zur Spracherkennung sind insbesondere auch im Informationsspeicher IFS abgelegt. Für die Anwendung als Anrufbeantworter sind z. B. Ansagetexte im Informationsspeicher IFS abgelegt.

Prinzipiell kann das Koppelfeld KF entfallen; das heißt, die Datensteuerung DSP ist an die PCM-Highways PCMO, PCM1 direkt angeschlossen. Durch die Zwischenschaltung des Koppelfeldes ist aber die Erreichbarkeit der Teilnehmer besser.

## Patentansprüche

1. Informationsserver, insbesondere Sprachserver, für eine Vermittlungsanlage mit folgenden Baugruppen:
- einer Sende- und Empfangs-(SE) sowie Datensteuereinrichtung (DSP) für die über das Vermittlungssystem zu übertragenden Daten der Informationskanäle,
- einem Informationsspeicher (IFS) für zu übertragende Standardinformationen,
- einem Zwischenspeicher (ZWS) zur Aufnahme der zu empfangenden und zu sendenden Daten der Informationskanäle,
- einem Steuerprozessor (STP) für den Datentausch zwischen dem Zwischenspeicher (ZWS) und einem Festspeichermedium (FSM) zur Ablage der Daten, insbesondere in komprimierter Form, mittels eines PC-kompatiblen File-Systems.

2. Informationsserver nach Anspruch 1, dadurch gekennzeichnet, daß zwischen den Sende- und Empfangseinrichtungen (SE) und mindestens zwei Informationskanälen (PCMO, PCM1) ein Koppelfeld (KF) vorgesehen ist.

3. Informationsserver nach Anspruch 1 oder 2, dadurch gekennzeichnet, daß der Steuerprozessor (STP) und/oder das Koppelfeld (KF) über einen separaten Steuerkanal (LAN) mit dem Vermittlungsrechner der Vermittlungsanlage verbunden ist.

4. Informationsserver nach Anspruch 3, dadurch gekennzeichnet, daß der Steuerkanal (LAN) auch zur Übertragung von Daten der Vermittlungsanlage ausgerüstet ist.

5. Informationsserver nach einem der Ansprüche 1 bis 4, dadurch gekennzeichnet daß der Informationsserver als sprachgeführtes Auskunftssystem betreibbar ist, wobei die Auskunftsinformation im Informationsspeicher (IFS) abgelegt ist und zur Sprachführung der Datensteuereinrichtung (DSP) ein Spracherkenner (SP) zugeordnet ist.

6. Informationsserver nach einem der Ansprüche 1 bis 4, dadurch gekennzeichnet, daß der Informationsserver als Anrufbeantworter oder als Mailbox betreibbar ist, wobei Ansagetexte im Informationsspeicher (IFS) abgelegt sind.

7. Informationsserver nach Anspruch 5 oder 6, dadurch gekennzeichnet, daß die Referenzdaten des Spracherkenners (SP) im Informationsspeicher (IFS) abgelegt sind.

8. Informationsserver nach einem der Ansprüche 1 bis 7, dadurch gekennzeichnet, daß das Festspeichermedium (FSM) aus einem wechselbaren Datenträger besteht.

9. Informationsserver nach Anspruch 8 dadurch gekennzeichnet, daß ein PCMCIA-Festplatten-Laufwerk oder eine PCMCIA-Flash-Disk für das Festspeichermedium FSM vorgesehen ist, welches am PC mit Steuerprogrammen für den Steuerprozessor (STP) bzw. die Datenaufbereitungseinrichtung (DSP) und/oder Daten für die Vermittlungssteuerung geladen werden kann und anschließend in einen Steckplatz des Informationsservers übertragbar ist.

10. Informationsserver nach einem der Ansprüche 1 bis 9 dadurch gekennzeichnet, daß der Datensteuereinrichtung (DSP) eine Datenkompressions- und -dekompressionseinrichtung (DK) zugeordnet ist.

11. Informationsserver nach Anspruch 1 oder einem der Ansprüche 4 bis 10, dadurch gekennzeichnet, daß zur Ankopplung des Informationsservers an die Informationskanäle eine IOM2-Schnittstelle vorgesehen ist.

12. System bestehend aus mehreren Informationsservern nach einem der Ansprüche 1 bis 11, dadurch gekennzeichnet, daß die einzelnen Informationsserver untereinander über einen/den separaten Steuerkanal (LAN) verbunden sind.

13. System nach Anspruch 12, dadurch gekennzeichnet, daß nur einer oder wenige der einzelnen Informationsserver mit einem Festspeichermedium (FSM) ausgerüstet ist/sind und daß der/die übrige(n) Informationsserver gemeinsam zu diesem Festspeichermedium (FSM) über den separaten Steuerkanal (LAN) zugreift.
